# EUROPÄISCHE PATENTSCHRIFT

(11) **EP 0 952 988 B1**
(45) Veröffentlichungstag und Bekanntmachung des Hinweises auf die Patenterteilung: **08.12.2004**
(21) Anmeldenummer: 98905305.3
(22) Anmeldetag: 16.01.1998
(51) Int. Cl.: C08B 31/00, C08L 3/06, D21H 17/28, D21H 17/44

(54) **POLYMERMODIFIZIERTE ANIONISCHE STÄRKE, VERFAHREN ZU IHRER HERSTELLUNG UND IHRE VERWENDUNG**
POLYMER-MODIFIED ANIONIC STARCH, METHOD FOR ITS PRODUCTION, AND ITS USE
AMIDON ANIONIQUE MODIFIE AVEC UN POLYMERE, SON PROCEDE DE PRODUCTION ET SON UTILISATION

(30) Priorität: 17.01.1997 DE 19701523
(43) Veröffentlichungstag der Anmeldung: 03.11.1999
(73) Patentinhaber: BASF AKTIENGESELLSCHAFT, 67056 Ludwigshafen (DE)
(72) Erfinder: NIESSNER, Manfred, D-67105 Schifferstadt (DE); NILZ, Claudia, D-67127 Rödersheim-Gronau (DE); LORENCAK, Primoz, D-67069 Ludwigshafen (DE); RÜBENACKER, Martin, D-67122 Altrip (DE); Dr. ETTL, Roland, 68775 Ketsch (DE)
(74) Vertreter: Kinzebach, Werner, Dr.
(86) Internationale Anmeldenummer: PCT/EP1998/000231
(87) Internationale Veröffentlichungsnummer: WO 1998/031711

(56) Entgegenhaltungen:
- WO-A-96/13525
- DE-A- 3 644 072
- DE-A- 3 706 525
- DE-A- 3 909 004
- GB-A- 2 292 394
- DATABASE WPI Week 8302 Derwent Publications Ltd., London, GB; AN 2921K XP002066224 & JP 57 191 395 A (KYORITSU YUKI) , 25.November 1982
- PATENT ABSTRACTS OF JAPAN vol. 18, no. 490 (C-1249), 13.September 1994 & JP 06 158596 A (NEW OJI PAPER) & DATABASE WPI Week 9427 Derwent Publications Ltd., London, GB; AN 222745

## Beschreibung

Die vorliegende Erfindung betrifft mit Polymeren, welche kationische und/oder kationisierbare Gruppen enthalten, modifizierte, anionische Stärkederivate, Verfahren zu deren Herstellung sowie deren Verwendung als Hilfsmittel bei der Herstellung von Papier, Pappe und Karton, insbesondere als Trockenverfestigungsmittel für Papier.

In Ullmanns Enzyklopädie der Technischen Chemie, 4. Aufl., Verlag Chemie, Weinheim, 1979, Bd. 17, S. 581 ff. wird allgemein die Verwendung von aufgeschlossenen, wasserlöslichen Stärken und von wasserlöslichen Stärkederivaten als Hilfsstoffe für die Papierherstellung, insbesondere zur Erhöhung der Festigkeit des Papiers beschrieben. Dabei ist jedoch die Retention der gelösten Stärken im Papier gering, was zu einer starken Belastung der Abwässer führt.

Die US-A-3,734,802 beschreibt die Verwendung kationischer Dextran-Pfropfcopolymere als Additive zur Verbesserung der Trockenfestigkeit von Papier. Dabei werden die Pfropfcopolymere zu einer wässrigen Cellulose-Dispersion gegeben. Dieses Gemisch setzt man dann zur Herstellung von Papierbögen ein. Die Pfropfcopolymere werden durch Pfropfen von Dextran, einem in der Natur vorkommenden Polymerisat mit einem mittleren Molekulargewicht von etwa 20.000 bis etwa 50.000.000, mit kationischen Monomeren, z.B. diallylischen, quaternären Ammoniumverbindungen, wie Diallyldimethylammoniumchlorid, oder acrylischen, quaternären Ammoniumverbindungen, wie Dimethylaminoethylmethacrylat und deren Mischungen mit Acrylamid oder Methacrylamid hergestellt. Dabei wird die Pfropfcopolymerisation vorzugsweise in Gegenwart eines Redoxkatalysators, z.B. auf Cer-Basis durchgeführt.

Die US-A-3,467,608 beschreibt ein Verfahren zur Herstellung einer kationischen Stärke durch Erhitzen einer wässrigen Stärkeaufschlämmung unter Zusatz eines Polyalkylenimins, wie z.B. Polyethylenimin, oder eines Polyalkylenpolyamins, wie z.B. Polyethylenpolyamin, wobei das Molekulargewicht des zur Modifizierung verwendeten Polymers mindestens 50.000 beträgt. Bezogen auf den Feststoffgehalt enthält das Reaktionsgemisch 0,5 bis 40 Gew.-% des Polymerisats und 60 bis 99,5 Gew.-% Stärke. Dabei wird zwar auch allgemein die Möglichkeit der Verwendung von durch Hydrolyse, Oxidation, Veresterung und Veretherung erhältlichen modifizierten Stärken beschrieben. Es findet sich in der Schrift jedoch kein Hinweis auf die Verwendung von anionisch modifizierten Stärken. Sämtliche bevorzugte Ausführungsformen betreffen nicht-modifizierte Kartoffel- und Maisstärke. Die resultierenden kationischen Stärkederivate werden als Flockungsmittel verwendet.

Die US-A-4,097,427 beschreibt ein Verfahren zur Kationisierung von Stärke, wobei eine wässrige Stärkeaufschlämmung unter alkalischen Reaktionsbedingungen mit einem wasserlöslichen Polymer, das quaternäre Ammoniumgruppen enthält, in Gegenwart eines Oxidationsmittels umgesetzt wird. Dabei werden ausschließlich unmodifizierte oder gering abgebaute Stärken zur Modifizierung verwendet, bevorzugt Mais- und Tapiokastärke. Die quaternäre Ammoniumgruppen enthaltenden Polymere werden ausgewählt unter Polymeren mit Epichlorhydrineinheiten, quaternisierten Polyethyleniminen, quaternisierten Diallyldialkylaminpolymeren etc. Als Oxidationsmittel werden z.B. Ammoniumpersulfat, Wasserstoffperoxid, Natriumhypochlorit, Ozon oder t.-Butylhydroperoxid verwendet. Der pH-Wert der Stärkeaufschlämmung wird mit wasserlöslichen Basen auf etwa 8 eingestellt. Die so hergestellten, modifizierten kationischen Stärken werden als Trockenverfestigungsmittel bei der Herstellung von Papier dem Papierstoff zugegeben. Bei diesem Verfahren wird das Abwasser jedoch durch einen sehr hohen CSB-Wert (CBS = chemischer Sauerstoffbedarf) belastet.

Die US-A-4,146,515 beschreibt ein Verfahren zur Herstellung einer gallertartigen, kationischen Stärke zur Oberflächenleimung und Beschichtung von Cellulosematerialien. Dabei wird eine wässrige Aufschlämmung einer partiell oxidierten Stärke zusammen mit einem kationischen Polymer in einem kontinuierlichen Kocher aufgeschlossen. Als kationische Polymere werden dabei Kondensate aus Epichlorhydrin und Dimethylamin, Polymerisate von Diallyldimethylammoniumchlorid, quaternisierte Reaktionsprodukte von vinylidenchlorid und Ammoniak, quaternisiertes Polyethylenimin sowie quaternisiertes Polyepichlorhydrin verwendet. Als Stärken werden partiell, z.B. mit Natriumhypochlorit, oxidierte Stärken verwendet, die in der Schrift mißverständlich auch als anionische Stärken bezeichnet werden. Für eine mögliche Modifizierung von üblicherweise als anionische Stärken bezeichnete Stärkeestern und Stärkeethern fehlt in der Schrift jeglicher Hinweis.

Die DE-A-37 19 480 und die EP-A-0 282 761 beschreiben ein Verfahren zur Herstellung von Papier, Pappe und Karton mit hoher Trokkenfestigkeit durch Zugabe eines Trockenverfestigungsmittels aus einer Mischung aus kationischen Polymerisaten und Stärke zum Papierstoff. Dabei enthalten die kationischen Polymerisate als charakteristische Monomere Einheiten von Diallyldimethylammoniumchlorid, N-Vinylamin oder N-Vinylimidazolin einpolymerisiert. Ebenso kann Polyethylenimin als kationisches Polymer verwendet werden. Zur Herstellung der Trockenverfestigungsmittel wird eine wässrige Aufschlämmung einer nativen Kartoffelstärke entweder in Gegenwart der Polymerisate durch Erhitzen auf Temperaturen oberhalb der Verkleisterungstemperatur in Abwesenheit von Oxidationsmitteln, Polymerisationsinitiatoren und Alkalien aufgeschlossen oder eine bereits aufgeschlossene Kartoffelstärke mit den kationischen Polymerisaten bei Temperaturen im Bereich von 15 bis 70°C zur Reaktion gebracht. Dabei wird als Stärke ausschließlich native oder thermisch abgebaute Kartoffelstärke verwendet und die Modifizierung mit den kationischen Polymerisaten erfolgt in wässriger Aufschlämmung oder in wässriger Lösung.

Einen ähnlichen Offenbarungsgehalt besitzt die EP-A-0 301 372, wobei kationisch modifizierte, enzymatisch abgebaute Stärken verwendet werden.

Die US-A-4,880,497 und die US-A-4,978,427 beschreiben wasserlösliche Copolymere, die Vinylamineinheiten enthalten und ihre Verwendung als Naßverfestiger und Trockenverfestiger für Papier. Die Polymerisate werden durch Copolymerisation von N-Vinylformamid und einem ethylenisch ungesättigten Monomer, ausgewählt unter Vinylacetat, Vinylpropionat, Alkylvinylethern, Estern, Nitrilen und Amiden der Acryl- und Methacrylsäure und N-Vinylpyrrolidon und anschliessender Hydrolyse von 30 bis 100 Mol-% der Formylgruppen des resultierenden Copolymerisats unter Bildung von Aminogruppen hergestellt. Die hydrolysierten Copolymere werden zur Papierherstellung in Mengen von 0,1 bis 5 Gew.-%, bezogen auf trockene Fasern, verwendet.

Die EP-A-0 418 343 beschreibt ebenfalls ein Verfahren zur Herstellung von Papier, Pappe und Karton durch Entwässern eines Papierstoffs in Gegenwart von N-vinylformamid-Einheiten enthaltenden Polymerisaten. Dabei werden nicht hydrolysierte Copolymerisate verwendet, die N-Vinylformamid und mindestens ein weiteres, kationische Gruppen enthaltendes Monomer einpolymerisiert enthalten. Diese zusätzlichen Monomere werden aus der Gruppe der (Meth)acrylamide mit Ammoniumalkylenresten oder aus der Gruppe der Diallyldialkylammoniumverbindungen ausgewählt. Zur Erzielung einer guten Retention gegenüber Papierfasern bei der Verwendung dieser Copolymerisate als Trockenverfestigungsmittel für Papier wird dem Papierstoff eine wässrige Lösung zugesetzt, die zuvor durch Erhitzen der wässrigen Copolymerisate gemeinsam mit nativer Kartoffelstärke auf Temperaturen oberhalb der Verkleisterungstemperatur der Stärke in Abwesenheit von Oxidationsmitteln, Polymerisationsinitiatoren und Alkalien hergestellt wurde.

Die WO 96/13525 beschreibt ein Verfahren zur kationischen Modifizierung von Stärke durch Umsetzung verschiedener nativer Stärken und Wachsstärken mit Polymeren, die Amino- und/oder Ammoniumgruppen enthalten. Die Umsetzung erfolgt dabei in wässriger Lösung bei erhöhten Temperaturen und erhöhtem Druck in Abwesenheit von Oxidationsmittlen, Polymerisationsinitiatoren und Alkalien, wobei die Stärke weitgehend aufgeschlossen wird und nur ein geringfügiger Molekulargewichtsabbau von höchstens 10 Gew.-% der Stärke stattfindet. Die so erhaltenen, kationisierten Stärken werden als Trockenverfestiger bei der Papierherstellung verwendet.

Die JP-A-57191395 beschreibt ein Verfahren zur Papierherstellung, bei dem man die Oberfläche des Papiers mit einer Lösung behandelt, die durch thermische Behandlung einer wässrigen Dispersion einer anionisch modifizierten Stärke und anschließender Zugabe eines kationischen Polymers erhalten wird.

Die GB-A-2292394 beschreibt unter Anderem ein Verfahren zur Verbesserung der Stärke von Papier, bei dem man zur Papierpulpe eine anionische Stärke und ein kationisches Polymer als Flockungsmittel gibt.

Die JP-A-06158596 beschreibt ein Papier für die Verwendung in Tintenstrahl-Druckern, das auf wenigstens einer Seite eine Deckschicht aufweist, die eine veresterte Stärke und ein wasserunlösliches kationisches Polymer enthält.

Die Eigenschaften der zuvorgenannten, mit kationischen Polymeren modifizierten Stärkederivate sind verbesserungswürdig, insbesondere im Hinblick auf eine Verwendung als Hilfstoffe für die Papierherstellung. So ist zur Erzielung einer guten mechanischen Festigkeit des Produkts im trockenen Zustand eine gute Retention des jeweiligen Trockenverfestigers gegenüber den Zellulosefasern erforderlich. Der vorliegenden Erfindung liegt daher die Aufgabe zugrunde, neue kationisch modifizierte Stärken zur Verfügung zu stellen, die eine verbesserte Stärkeretention gegenüber den Papierfasern aufweisen und somit bei einer Verwendung als Trockenverfestiger ein Papierprodukt mit guten mechanischen Eigenschaften liefern.

Überraschenderweise wurde nun gefunden, daß die Aufgabe gelöst wird, wenn man anionisch modifizierte Stärke mit kationischen Polymeren versetzt.

Gegenstand der Erfindung ist Verfahren zur Herstellung von Stärke, die mit wenigstens einem kationischen Polymer P) modifiziert ist, wobei man
- a): eine anionisch modifizierte Stärke A) mit dem kationischen Polymer P) umsetzt, oder
- b): eine native Stärke B) oder eine nicht anionisch modifizierte Stärke C), die ausgewählt ist unter hydrolytisch oder enzymatisch abgebauten Stärken, oxidierten Stärken und mit anorganischen oder organischen Säuren veresterten sowie mit organischen Halogenverbindungen, Epoxiden oder Sulfaten veretherten chemisch modifizierten Stärken, mit dem kationischen Polymer P) in Gegenwart eines anionischen Modifizierungsmittels M) umsetzt, das ausgewählt ist unter α-Halogencarbonsäuren, deren Salzen und zwei- oder mehrwertigen anorganischen oder organischen Säuren,
und wobei man die Stärke während der Umsetzung mit dem Polymer aufschließt.

Das Gewichtsverhältnis von Wasser oder wässrigem Medium zu Stärke beträgt im allgemeinen etwa 1:0,0005 bis 1:0,2, bevorzugt 1:0,001 bis 1:0,1, insbesondere 1:0,02 bis 1:0,06.

Das Gewichtsverhältnis von Stärke zu kationischem Polymer P) beträgt im allgemeinen etwa 1:0,0005 bis 1:2, bevorzugt etwa 1:0,001 bis 1:1, insbesondere etwa 1:0,01 bis 1:0,1.

Die kationische Modifizierung der Stärke erfolgt im allgemeinen bei einer Temperatur von etwa 80 bis 220°C, bevorzugt 100 bis 200°C, insbesondere 120 bis 140°C. Dabei liegt die Temperatur oberhalb der Verkleisterungstemperatur der Stärke, so daß im wesentlichen gleichzeitig mit der Modifizierung auch ein Aufschluß der Stärken erfolgt.

Die kationische Modifizierung kann prinzipiell bei Unterdruck, Normal- oder Überdruck erfolgen. Im allgemeinen erfolgt die Modifizierung bei dem Druck, den das Reaktionsmedium bei den zuvor angegebenen Temperaturen entwickelt. Er liegt im allgemeinen in einem Bereich von etwa 1,0 bis 10,0 bar, bevorzugt 1,2 bis 7,9 bar.

Nach einer bevorzugten Ausführungsform wird das Reaktionsgemisch während der Umsetzung der Einwirkung von Scherkräften ausgesetzt. Dies kann z.B. durch Rühren der Suspension oder Lösung mit einer Rührergeschwindigkeit von etwa 100 bis 2000 U/min, bevorzugt 200 bis 1000 U/min erfolgen.

Wird das zuvor beschriebene erfindungsgemäße Verfahren zur kationischen Stärkemodifizierung bei Temperaturen oberhalb der Verkleisterungstemperatur durchgeführt, so erfolgt auch ein Aufschluß der Stärke. Bevorzugt wird die Stärke im erfindungsgemäßen Verfahren zu wenigstens 80 Gew.-%, insbesondere zu mindestens 90 Gew.-%, aufgeschlossen.

Unter Stärkeaufschluß versteht man die Überführung der festen Stärkekörner in eine wasserlösliche Form, wobei Überstrukturen (Helixbildung, intermolekulare H-Brücken etc.) aufgehoben werden, ohne daß es zum einem wesentlichen Abbau von den die Stärke aufbauenden Amylose- und Amylopektineinheiten zu Oligosacchariden oder Glucose kommt.

Nach einer besonders bevorzugten Ausführungsform des erfindungsgemäßen Verfahrens findet die Modifizierung der Stärke mit dem kationischen Polymer P), ggf. einem anionischen Modifizierungsmittel M) und der Stärkeaufschluß bei Temperaturen oberhalb von 100°C, vorzugsweise bei 105 bis 170°C, bei erhöhtem Druck von etwa 1,2 bis etwa 7,9 bar und gleichzeitigem kräftigen Rühren statt. Bei diesen Reaktionsbedingungen wird die Stärke zu mindestens 80 Gew.-%, bevorzugt zu mindestens 90 Gew.-%, insbesondere zu mehr als 95 Gew.-% aufgeschlossen und mit dem kationischen Polymerisat modifiziert. Dabei ist die Abbaurate bzgl. der Molekulargewichte der eingesetzten Stärken im allgemeinen gering. So wird das Molekulargewicht der Stärken im allgemeinen um höchstens 20 %, bevorzugt um höchstens 10 %, insbesondere um höchstens 5 %, verringert.

Vorzugsweise wird die Stärke beim Aufschliessen klar gelöst, so daß sich nach der Umsetzung bei Filtration der Reaktionslösung mit einer Celluloseacetatmembran mit einem Porendurchmesser von 1,2 µm keine unumgesetzte Stärke mehr abfiltrieren lässt. Gewünschtenfalls können jedoch eventuell vorhandene, unlösliche Stärkereste auf diese Weise vom Produkt abgetrennt werden. Eine quantitative Erfassung des Abbaugrades der Stärke ist mit Hilfe der Gelpermeationschromatographie möglich. Der Grad des Stärkeaufschlusses vom angequollenen Stärkekorn bis zur vollständig gelösten Stärke kann mit Hilfe mikroskopischer und elektronenmikroskopischer Untersuchungen bestimmt werden.

Die Reaktion kann in den allgemein üblichen Apparaturen durchgeführt werden, in denen Stärke technisch aufgeschlossen wird. Bei Temperaturen oberhalb von etwa 100°C ist die Umsetzung in druckdichten Apparaturen, wie z.B. druckdichten Rührkesseln, Autoklaven, Knetern, Jet-Kochern, Extrudern etc. erforderlich. Die erforderliche Kontaktzeit hängt von der verwendeten Temperatur ab. Im allgemeinen erfolgt der Aufschluß der Stärke über einen Zeitraum von 0,1 sec bis 6 Stunden, bevorzugt etwa 0,2 sec bis 5 Stunden, inbesondere bevorzugt etwa 0,5 sec bis 30 min. Erfolgt der Aufschluß bei höheren Temperaturen, z.B. bei Temperaturen im Bereich von etwa 100°C bis 200°C, so benötigt man im allgemeinen kürzere Kontakzeiten, z.B. etwa 0,1 sec bis 15 min.

Zum Stärkeaufschluß können gewünschtenfalls den Aufschluß der Stärke unterstützende Additive sowie das Molekulargewicht der Stärke beeinflussende Additive, wie z.B. Säuren, oder auch weitere Papierhilfsmittel zugesetzt werden.

Für das erfindungsgemäße Verfahren eignen sich im allgemeinen Polymere P), die kationische oder kationisierbare Gruppen enthalten. Solche Gruppen leiten sich im allgemeinen von Heteroatomen, wie N, P, O, S etc. ab, die befähigt sind, z.B. nach Umsetzung mit einer Säure oder einem Alkylierungsmittel, stabile Kationen auszubilden. Für das erfindungsgemäße Verfahren eignen sich bevorzugt Polymere, die Amino- und/oder Ammoniumgruppen enthalten. Diese Verbindungen werden auch als kationische Polymere bezeichnet. Geeignete kationische Polymere sind in der EP-A-0 282 761, EP-A-0 301 372, EP-A-0 418 343 und WO 96/13525 beschrieben, auf die hiermit in vollem Umfang Bezug genommen wird.

Die geeigneten kationischen Polymere enthalten Einheiten von Monomeren mit kationischen oder kationisierbaren Gruppen, ausgewählt unter
- a): N-Vinylaminen der Formel I 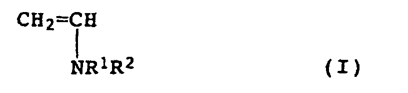 worin
R¹ und R² unabhängig voneinander für Wasserstoff oder Alkyl stehen;
- b): Aziridinen (Alkyleniminen) der Formel II 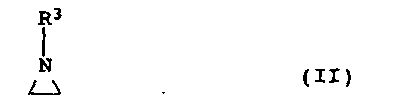 worin R³ für Wasserstoff oder Alkyl steht;
- c): Diallyldialkylammonium-Verbindungen;
- d): N-Vinylimidazolinen der Formel III 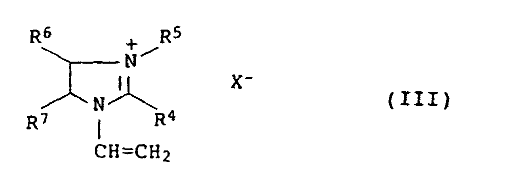 worin
R⁴ und R⁵ unabhängig voneinander für Wasserstoff, Alkyl, Aryl und Alkylaryl stehen,
R⁶ und R⁷ unabhängig voneinander für Wasserstoff und Alkyl stehen, und
X⁻ für ein Gegenion, vorzugsweise ausgewählt unter F⁻, Cl⁻, Br⁻, I⁻, SO₄²⁻, HSO₄⁻, Alkyl-O-SO₃H⁻, R⁸-COO⁻ steht, wobei R⁸ für einen Rest, ausgewählt unter Alkyl, Cycloalkyl, Aryl, Cycloalkylalkyl und Arylalkyl steht, welcher ggf. substituiert sein kann;
- e): aminoalkylsubstituierten Estern und Amiden der Acrylsäure und der Methacrylsäure der Formel IV 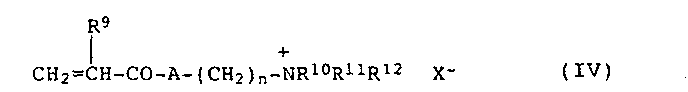 worin
n für eine ganze Zahl von 1 bis 6 steht,
A für O oder NH steht,
R⁹ für Wasserstoff oder Methyl steht,
R¹⁰, R¹¹ und R¹² unabhängig voneinander für Wasserstoff, Alkyl, Cycloalkyl, Aryl, Cycloalkylalkyl und Arylalkyl stehen und
X⁻ die zuvor angegebene Bedeutung besitzt, sowie gegebenenfalls weitere Comonomere einpolymerisiert.

Im Rahmen der vorliegenden Erfindung steht der Ausdruck 'Alkyl' für geradkettige und verzweigte Alkylgruppen. Vorzugsweise handelt es sich dabei um geradkettige oder verzweigte C₁-C₁₈-Alkyl-, insbesondere C₁-C₈-Alkyl-, bevorzugter C₁-C₆-Alkyl- und besonders bevorzugt C₁-C₄-Alkylgruppen. Beispiele für Alkylgruppen sind insbesondere Methyl, Ethyl, Propyl, Isopropyl, n-Butyl, 2-Butyl, 2-Methylpropyl, t.-Butyl, n-Pentyl, 2-Pentyl, 3-Pentyl, 2-Methylbutyl, 3-Methylbutyl, 1,2-Dimethylpropyl, 1,1-Dimethylpropyl, 2,2-Dimethylpropyl, n-Hexyl, 2-Hexyl, 3-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 2-Ethylbutyl, 1-Ethyl-2-methylpropyl, n-Heptyl, 2-Heptyl, 3-Heptyl, 4-Heptyl, 2-Ethylpentyl, 2-Ethylhexyl, Octyl, Decyl, Dodecyl etc.

Substituierte Alkylreste weisen vorzugsweise 1, 2 oder 3 Substituenten, insbesondere 1 oder 2 Substituenten in beliebiger Position auf.

Bei der Cycloalkylgruppe handelt es sich vorzugsweise um eine C₅-C₇-Cycloalkylgruppe, wie Cyclopentyl, Cyclohexyl oder Cycloheptyl.

Wenn die Cycloalkylgruppe substituiert ist, weist sie vorzugsweise 1, 2, 3, 4 oder 5, insbesondere 1, 2 oder 3 Alkylreste als Substituenten auf.

Aryl steht vorzugsweise für Phenyl oder Naphthyl und insbesondere für Phenyl.

Substituierte Aryl- oder Cycloalkylreste weisen als Substituenten, z.B. C₁-C₈-Alkyl, C₁-C₈-Alkoxy, Halogen, Nitro oder Carboxyl auf. Dabei sind in der Regel 1, 2 oder 3 Substituenten bevorzugt.

Arylalkyl steht vorzugsweise für Phenyl-C₁-C₄-alkyl, insbesondere Benzyl oder Phenethyl.

Nach einer bevorzugten Ausführungsform enthalten die kationischen Polymere P) Einheiten von N-Vinylaminen der Formel (I) einpolymerisiert, worin R¹ für Wasserstoff oder Alkyl und R² für Wasserstoff steht. Solche Polymere sind z.B. durch vollständige oder partielle Hydrolyse von Homo- oder Copolymerisaten von offenkettigen N-Vinylcarbonsäureamiden der Formel (V) 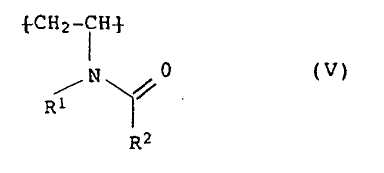 worin R¹ und R² unabhängig voneinander für Wasserstoff oder C₁-C₆-Alkyl stehen unter Abspaltung der -COR²-Gruppe erhältlich. Geeignete N-Vinylcarbonsäureamide sind beispielsweise N-Vinylformamid, N-Vinyl-N-methylformamid, N-Vinyl-N-ethylformamid, N-Vinyl-N-propylformamid, N-Vinyl-N-isopropylformamid, N-Vinyl-N-butylformamid, N-Vinyl-N-sek.butylformamid, N-Vinyl-N-tert.butylformamid, N-Vinyl-N-pentylformamid. Zur Herstellung der Polymere P) können diese Monomere entweder alleine oder in Mischungen polymerisiert werden. Vorzugsweise geht man von Homopolymerisaten des N-Vinylformamids aus.

Die Hydrolyse der einpolymerisierten N-Vinylcarbonsäureamide zu den entsprechenden Aminen erfolgt nach gängigen Methoden gemäß dem Stand der Technik in Gegenwart von Hydrolysemitteln, wie z.B. Mineralsäuren, vorzugsweise Salzsäure und Schwefelsäure, oder Basen, insbesondere Alkali- und Erdalkalihydroxiden oder Ammoniak. Besonders bewährt hat sich die Hydrolyse in wässriger Lösung.

Die hydrolysierten Polymerisate, die Einheiten der Formel (I) enthalten, worin R² für Wasserstoff steht, haben K-Werte von 15 bis 300, vorzugsweise 30 bis 200, bestimmt nach H. Fikentscher in 5 gew.-%iger wässriger Kochsalzlösung bei pH 7, einer Temperatur von 25°C und einer Polymerkonzentration von 0,5 Gew.-%.

Die durch Hydrolyse einpolymerisierter N-Vinylcarbonsäureamide erhältlichen kationischen Polymere P) mit Vinylamineinheiten der Formel (I) können zusätzlich weitere Comonomereinheiten enthalten.

Bevorzugt wird als Polymer P) ein Copolymer von Vinylaminen eingesetzt, dessen Comonomere ausgewählt sind unter N-Vinylcarbonsäureamiden, Vinylalkohol, Estern von Vinylalkohol mit Monocarbonsäuren, α,β-monoethylenisch ungesättigten Mono- und/oder Dicarbonsäuren und deren Salzen, Estern, Amiden und Nitrilen, Heterocyclen mit N-Vinylgruppen, α,β-monoethylenisch ungesättigten Sulfonsäuren und deren Estern, und deren Mischungen.

Vorzugsweise werden kationische Polymere P) eingesetzt, die
- i): 0,1 bis 100 Mol-% Vinylamineinheiten der Formel (I),
- ii): 0 bis 99,9 Mol-%, bevorzugt 1 bis 99 Mol-%, Einheiten weiterer monoethylenisch ungesättigter Monomere, vorzugsweise ausgewählt unter N-Vinylformamid, Vinylalkohol, Estern von Vinylalkohol mit C₁-C₈-Monocarbonsäuren, C₁-C₈-Vinylethern, α,β-ungesättigten C₃-C₁₈-Mono- und/oder C₄-C₂₀-Dicarbonsäuren und deren Salzen, Estern, Amiden und Nitrilen sowie N-Vinyllactamen,
- iii): 0 bis 5 Mol-% Monomere mit mindestens zwei ethylenisch ungesättigten, nicht konjugierten Doppelbindungen,
einpolymerisiert enthalten.

Beispiele für Monomere der Gruppe ii) sind neben den genannten N-Vinylcarbonsäureamiden z.B. Vinylalkohol, der durch partielle oder vollständige Hydrolyse entsprechender Vinylester, bevorzugt von Vinylacetat, erhältlich ist, Vinylester von gesättigten Carbonsäuren mit 1 bis 6 Kohlenstoffatomen, z.B. Vinylformiat, Vinylacetat, Vinylpropionat und Vinylbutyrat. Geeignet sind auch ungesättigte C₃- bis C₆-Mono- oder Dicarbonsäuren, wie z.B. Acrylsäure, Methacrylsäure, Maleinsäure, Crotonsäure, Itaconsäure und Vinylessigsäure sowie deren Alkalimetall- und Erdalkalimetallsalze, Ester, Amide und Nitrile, beispielsweise Methylacrylat, Methylmethacrylat, Ethylacrylat und Ethylmethacrylat oder Glykol- bzw. Polyglykolester ethylenisch ungesättigter Carbonsäuren, wobei jeweils nur eine OH-Gruppe der Glykole und Polyglykole verestert ist, z.B. Hydroxyethylacrylat, Hydroxyethylmethacrylat, Hydroxypropylacrylat, Hydroxybutylacrylat, Hydroxypropylmethacrylat, Hydroxybutylmethacrylat sowie die Acrylsäuremonoester von Polyalkylenglykolen eines Molekulargewichts von etwa 1.500 bis 10.000. Weiterhin geeignet sind die Ester von ethylenisch ungesättigten Carbonsäuren mit Aminoalkoholen, wie z.B. Dimethylaminoethylacrylat, Dimethylaminoethylmethacrylat, Diethylaminoethylacrylat, Diethylaminopropylmethacrylat, Diethylaminopropylacrylat, Dimethylaminopropylmethacrylat, Diethylaminopropylacrylat, Diethylaminopropylmethacrylat, Dimethylaminobutylacrylat und Diethylaminobutylacrylat. Die basischen Acrylate werden in Form der freien Basen, der Salze mit Mineralsäuren, wie z.B. Salzsäure, Schwefelsäure und Salpetersäure, der Salze mit organischen Säuren, wie Ameisensäure oder Benzolsulfonsäure, oder in quaternisierter Form eingesetzt. Geeignete Quaternisierungsmittel sind beispielsweise Dimethylsulfat, Diethylsulfat, Methylchlorid, Ethylchlorid oder Benzylchlorid.

Weiterhin eignen sich als Comonomere ii) ungesättigte Amide, wie beispielsweise Acrylamid, Methacrylamid sowie N-Alkylmono- und - diamide mit Alkylresten von 1 bis 6 C-Atomen, wie z.B. N-Methylacrylamid, N,N-Dimethylacrylamid, N-Methylmethacrylamid, N-Ethylacrylamid, N-Propylacrylamid und tert.-Butylacrylamid sowie basische (Meth)acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Diethylaminopropylacrylamid, Dimethylaminopropylmethacrylamid und Diethylaminopropylmethacrylamid.

Als Comonomere ii) kommen auch Vinylether mit Alkylresten mit 1 bis 6 Kohlenstoffatomen in Frage, z.B. Methylvinylether, Ethylvinyl-ether, Propylvinylether, Isopropylvinylether, n-Butylvinylether, n-Pentylvinylether und n-Hexylvinylether oder Vinylether mit aromatischen Substiuenten, wie z.B. Phenylvinylether oder Benzylvinylether.

Weiterhin sind als Comonomere ii) N-Vinylpyrrolidon, N-Vinylcaprolactam, Acrylnitril, Methacrylnitril, N-Vinylimidazol sowie substituierte N-Vinylimidazole, wie z.B. N-Vinyl-2-methylimidazol, N-Vinyl-4-methylimidazol, N-Vinyl-5-methylimidazol, N-Vinyl-2-ethylimidazol, und N-Vinylimidazoline, wie z.B. Vinylimidazolin, N-Vinyl-2-methylimidazolin, und N-Vinyl-2-ethylimidazolin geeignet. N-Vinylimidazole und N-Vinylimidazoline werden außer in Form der freien Basen auch in mit Mineralsäuren oder organischen Säuren neutralisierter oder in quaternisierter Form eingesetzt, wobei die Quaternisierung vorzugsweise mit Dimethylsulfat, Diethylsulfat, Methylchlorid oder Benzylchlorid vorgenommen wird.

Weiterhin sind als Comonomere ii) Sulfogruppen enthaltende Monomere, wie beispielsweise Vinylsulfonsäure, Allylsulfonsäure, Methallylsulfonsäure, Styrolsulfonsäure oder Acrylsäure-3-sulfopropylester geeignet.

Bei der Verwendung von basischen Comonomeren ii), wie z.B. basischen Acrylestern und -amiden, kann oftmals auf eine Hydrolyse der N-Vinylcarbonsäureamide verzichtet werden. Die Copolymerisate umfassen auch Terpolymerisate und solche Polymerisate, die zusätzlich mindestens ein weiteres Monomer einpolymerisiert enthalten.

Die zuvorgenannten Polymere P) auf Basis von Vinylamineinheiten können weiterhin 0 bis 5 Mol-% Monomereinheiten mit mindestens zwei ethylenisch ungesättigten, nicht konjugierten Doppelbindungen einpolymerisiert enthalten. Derartige Comonomere iii) werden üblicherweise bei der Copolymerisation als Vernetzer verwendet. Die Mitverwendung dieser Comonomere bei der Copolymerisation bewirkt eine Erhöhung der Molmassen der Copolymerisate. Geeignete Verbindungen iii) sind z.B. Methylenbisacrylamid, Ester von Acrylsäure und Methacrylsäure mit mehrwertigen Alkoholen, z.B. Glykoldiacrylat, Glycerintriacrylat, Glykoldimethacrylat, Glycerintrimethacrylat sowie mindestens zweifach mit Acrylsäure oder Meth-acrylsäure veresterte Polyole, wie Pentaerythrit und Glukose. Geeignete Vernetzer sind außerdem Divinylbenzol, Divinyldioxan, Pentaerythrittriallylether, Pentaallylsucrose, Divinylharnstoff und Divinylethylenharnstoff.

Insbesondere werden zur kationischen Modifizierung der Stärke Copolymere P) eingesetzt, die
- 1): 1 bis 100 Mol-% Vinylamin-Einheiten, und
- 2): 0 bis 99 Mol-% Monomereinheiten, ausgewählt unter Vinylformiat, Vinylacetat, Vinylpropionat, N-Vinylformamid, Vinylalkohol, Acrylnitril und N-Vinylpyrrolidon
einpolymerisiert enthalten.

Bevorzugt als kationische Polymere P) sind hydrolysierte Homopolymere von N-Vinylformamid sowie Copolymerisate aus Vinylamin-Einheiten 1) und Monomereinheiten 2) mit einem Hydrolysegrad von 2 bis 100, vorzugsweise 30 bis 95 Mol-%.

Bei Copolymeren, die Vinylester einpolymerisiert enthalten, tritt neben der Hydrolyse der N-Vinylformamideinheiten eine Hydrolyse der Estergruppen unter Bildung von Vinylalkoholeinheiten ein. Einpolymerisiertes Acrylnitril wird ebenfalls bei der Hydrolyse chemisch verändert, wobei z.B. Amid- und/oder Carboxylgruppen entstehen.

Weiterhin können die kationischen Polymerisate P) Aziridine der Formel (II) als Monomere enthalten. Dabei wird bevorzugt Ethylenimin verwendet, d.h. der Rest R³ steht vorzugsweise für Wasserstoff.

Vorzugsweise handelt es sich bei den Polymeren P) dann um Homopolymerisate, d.h. um Polyethylenimine, die durch Polymerisieren von Ethylenimin in Gegenwart von sauren Katalysatoren, wie Ammoniumhydrogensulfat, Salzsäure oder chlorierten Kohlenwasserstoffen, wie Methylchlorid, Ethylenchlorid, Tetrachlorkohlenstoff oder Chloroform erhältlich sind. Solche Polyethylenimine haben beispielsweise in 50 gew.-%iger wässriger Lösung eine Viskosität von etwa 500 bis 33.000, vorzugsweise 1.000 bis 31.000 mPa.s (gemessen nach Brookfield bei 20°C und 20 Upm). Zu den kationischen Polymeren P) dieser Gruppe gehören auch mit Ethylenimin gepropfte Polyamidoamine, die gegebenenfalls noch durch Umsetzung mit einem mindestens bifunktionellen Vernetzer vernetzt sein können. Produkte dieser Art werden beispielsweise durch Kondensieren einer Dicarbonsäure, wie Adipinsäure, mit einem Polyalkylenpolyamin, wie Diethylentriamin oder Triethylentetramin, Pfropfen mit Ethylenimin und Reaktion mit einem mindestens bifunktionellen Vernetzer, z.B. Bischlorhydrinäther von Polyalkylenglykolen hergestellt und werden z.B. in der US-A-4,144,123 und US-A-3,642,572 beschrieben.

Weiterhin kommen zur Stärkemodifizierung kationische Polymere P) mit Monomeren des obigen Typs c) in Betracht, die als charakteristische Monomereinheit Diallyldialkylammonium-Verbindungen enthalten. Polymerisate dieser Art sind z.B. aus der US-A-4,146,515 bekannt. Bevorzugt wird dabei Diallyldimethylammoniumchlorid verwendet. Unter Polymerisaten des Diallyldimethylammoniumchlorids sollen in erster Linie Homopolymerisate sowie Copolymerisate mit Acrylamid und/oder Methacrylamid verstanden werden. Die Copolymerisation kann dabei in jedem beliebigen Monomerverhältnis vorgenommen werden. Der K-Wert der Homo- und Copolymerisate des Diallaldimethylammoniumchlorids beträgt im allgemeinen mindestens 30, vorzugsweise 95 bis 180.

Als kationische Polymere P) eignen sich auch Homo- und Copolymerisate von gegebenenfalls substituierten N-Vinylimidazolinen d) der Formel (III).

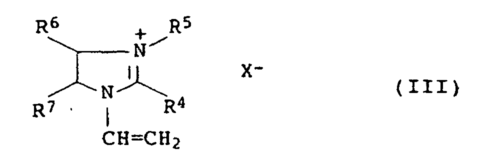

Diese können beispielsweise nach dem Verfahren der DE-B-11 82 826 hergestellt werden, wobei gegebenenfalls Copolymerisate zusammen mit Acrylamid und/oder Methacrylamid in wässrigem Medium bei pH-Werten von 0 bis 8, vorzugsweise von 1,0 bis 6,8 in Gegenwart von Polymerisationsinitiatoren, die in Radikale zerfallen, hergestellt werden.

Vorzugsweise setzt man bei der Polymerisation 1-Vinyl-2-imidazolin-Salze der Formel (III) ein, wobei R⁶ und R⁷ beide für Wasserstoff stehen.

Das Gegenion X⁻ in der Formel (III) kann prinzipiell jeder beliebige Säurerest einer anorganischen oder einer organischen Säure sein. Die Monomeren der Formel (III) werden erhalten, indem man die freien Basen, d.h. 1-Vinyl-2-imidazoline, mit der äquivalenten Menge einer Säure neutralisiert. Die Vinylimidazoline können neben den zuvor genannten Säureresten auch beispielsweise mit Trichloressigsäure, Benzolsulfonsäure oder Toluolsulfonsäure neutralisiert werden. Außer Salzen von 1-Vinyl-2-imidazolinen kommen als Monomere auch quaternisierte 1-Vinyl-2-imidazoline in Betracht. Sie werden hergestellt, indem man 1-Vinyl-2-imidazoline, die gegebenenfalls wie zuvor beschrieben substituiert sein können, mit bekannten Quaternisierungsmitteln umsetzt. Als Quaternisierungsmittel kommen beispielsweise C₁- bis C₁₈-Alkylchloride oder -bromide, Benzylchlorid oder -bromid, Epichlorhydrin, Dimethylsulfat und Diethylsulfat in Frage. Vorzugsweise verwendet man Epichlorhydrin, Benzylchlorid, Dimethylsulfat und Methylchlorid.

Zur Herstellung von wasserlöslichen Homopolymeren werden die Verbindungen der Formeln (III) vorzugsweise in wässrigem Medium polymerisiert.

Vorzugsweise setzt man als kationische Polymere P) Copolymere von Verbindungen der Formel (III) mit Acrylamid und/oder Methacrylamid ein. Diese Copolymerisate enthalten die Verbindungen der Formel (III) dann lediglich in wirksamen Mengen, d.h. in einer Menge von 1 bis 50 Gew.-%, vorzugsweise 10 bis 40 Gew.-%. Für die Modifizierung nativer Stärken besonders geeignet sind Copolymerisate aus 60 bis 85 Gew.-% Acrylamid und/oder Methacrylamid und 15 bis 40 Gew.-% N-Vinylimidazolin oder N-Vinyl-2-methylimidazolin. Die Copolymerisate können weiterhin durch Einpolymerisieren von anderen Monomeren, wie Styrol, N-Vinylformamid, Vinylformiat, Vinylacetat, Vinylpropionat, C₁- bis C₄-Alkylvinylether, N-Vinylpyridin, N-Vinylpyrrolidon, N-Vinylimidazol, ethylenisch ungesättigten C₃-bis C₅-Carbonsäuren sowie deren Estern, Amiden und Nitrilen, Natriumvinylsulfonat, Vinylchlorid und Vinylidenchlorid in Mengen von allgemein bis zu 25 Gew.-% modifiziert werden. Besonders geeignet für die kationische Modifizierung der Stärken A), B) oder C) sind Copolymere P), die
- 1): 70 bis 97 Gew.-% Acrylamid und/oder Methacrylamid,
- 2): 2 bis 20 Gew.-% N-Vinylimidazolin oder N-Vinyl-2-methylimidazolin und
- 3): 1 bis 10 Gew.-% N-Vinylimidazol
einpolymerisiert enthalten. Diese Copolymere P) werden durch radikalische Copolymerisation der Monomeren 1), 2) und 3) nach bekannten Polymerisationsverfahren hergestellt. Sie haben K-Werte im Bereich von 80 bis 150 (bestimmt nach H. Fikentscher in 5%iger wässriger Kochsalzlösung bei 25°C und einer Polymerkonzentration von 0,5 Gew.-%).

Weitere geeignete kationische Polymere P) können aminoalkylierte Ester und Amide der Acrylsäure und der Methacrylsäure nach Formel IV enthalten, wobei Homo- und Copolymerisate in Frage kommen.

Bevorzugt sind Copolymere aus 1 bis 99 Mol-%, vorzugsweise 30 bis 70 Mol-% Acrylamid und/oder Methacrylamid und 99 bis 1 Mol-%, vorzugsweise 70 bis 30 Mol-% Dialkylaminoalkylacrylaten und/oder - methacrylaten, z.B. Copolymerisate aus Acrylamid und N,N-Dimethylaminoethylacrylat oder N,N-Diethylaminoethylacrylat. Basische Acrylate liegen vorzugsweise in mit Säuren neutralisierter oder in quaternisierter Form vor. Die Quaternisierung kann wie zuvor beschrieben erfolgen. Die kationischen Polymerisate haben K-Werte von etwa 30 bis 300, vorzugsweise 100 bis 180 (bestimmt nach H. Fikentscher in 5 %iger wässriger Kochsalzlösung bei 25°C und einer Polymerkonzentration von 0,5 Gew.-%).

Geeignet sind auch Copolymere P) aus 1 bis 99 Mol-%, vorzugsweise 30 bis 70 Mol-% Acrylamid und/oder Methacrylamid und 99 bis 1 Mol-%, vorzugsweise 70 bis 30 Mol-% Dialkylaminoalkylacrylamid und/oder -methacrylamid. Die basischen Acrylamide und Methacrylamide liegen ebenfalls vorzugsweise in mit Säuren neutralisierter oder in quaternisierter Form vor. Als Beispiele seien genannt N-Trimethylammoniumethylacrylamidchlorid, N-Trimethylammoniumethylmethacrylamidchlorid, Trimethylammoniumethylacrylamidmethosulfat, Trimethylammoniumethylmethacrylamidmethosulfat, N-Ethyldimethylammoniumethylacrylamidethosulfat, N-Ethyldimethylammoniumethylmethacrylamidethoslufat, N-Ethyldimethylammoniumethylmethacrylamidethosulfat, Trimethylammoniumpropylacrylamidchlorid, Trimethylammoniumpropylmethacrylamidchlorid, Trimethylammoniumpropylacrylamidmethosulfat, Trimethylammoniumpropylmethacrylamidmethosulfat und N-Ethyldimethylammoniumpropylacrylamidethosulfat. Bevorzugt ist Trimethylammoniumpropylmethacrylamidchlorid.

Als kationische Polymere P) kommen auch Polyallylamine in Betracht. Polymerisate dieser Art werden erhalten durch Homopolymerisation von Allylamin, vorzugsweise in mit Säuren neutralisierter oder in quaternisierter Form oder durch Copolymerisieren von Allylamin mit anderen monoethylenisch ungesättigten Monomeren, entsprechend der zuvor beschriebenen Copolymere mit N-Vinylcarbonsäureamiden. Bevorzugt sind Homo- und Copolymere des Diallyldimethylammoniumchlorids.

Nach einer ersten erfindungsgemäßen Verfahrensvariante wird zur kationischen Modifizierung als Stärke mindestens eine anionisch modifizierte Stärke A) verwendet. Unter anionisch modifizierten Stärken versteht man Stärken, deren freie Hydroxylgruppen partiell oder vollständig durch anionische Gruppierungen modifiziert sind. Im allgemeinen sind für die anionische Modifizierung alle im folgenden bei der zweiten Verfahrensvariante genannten nativen, oxidativ, hydrolytisch oder enzymatisch abgebauten Stärken geeignet. Die anionische Modifizierung von Stärke ist in Günther Tegge, Stärke und Stärkederivate, Hamburg, Bers-Verlag, 1984, s. 179 bis 185 beschrieben. Im allgemeinen handelt es sich bei der anionischen Modifizierung um eine Umsetzung der Stärke mit α-Halogencarbonsäuren, bevorzugt Chloressigsäure, und deren Salzen oder um eine Veresterung der Stärke mit anorganischen oder organischen Säuren als anionischem Modifizierungsmittel M), wobei bevorzugt zwei- oder mehrwertige Säuren verwendet werden. Für die anionische Modifizierung geeigneten Säuren sind z.B. Orthophosphorsäure, Metaphosphorsäure, Pyrophosphorsäure, Polyphosphorsäuren, phosphorige Säure, Schwefelsäure, Pyroschwefelsäure, Thioschwefelsäure, Orthokieselsäure, Metakieselsäure, Pyrokieselsäure, Polykieselsäuren, Orthoborsäure, Metaborsäure, Polyborsäuren, O-Ester der Dithiokohlensäure (Xanthogensäuren), Oxalsäure, Malonsäure, Bernsteinsäure, Glutarsäure, Adipinsäure, Phthalsäure, Terephthalsäure, Äpfelsäure, Zitronensäure etc und deren Salze. Der Veresterungsgrad der so erhaltenen anionisch modifizierten Stärken beträgt im allgemeinen etwa 0,01 bis 100 Mol-%, bevorzugt 0,1 bis 50 Mol-%, insbesondere 0,2 bis 20 Mol-%, bezogen auf die freien Hydroxylgruppen in der zur Modifizierung verwendeten Stärke. Dabei können mehrbasige Säuren auch mehrfach verestert sein. Vorzugsweise verwendet man für das erfindungsgemäße verfahren Stärkeester, die anionische Funktionen tragen, beispielsweise Monostärke- und Distärkephosphorsäureester.

Nach einer zweiten Verfahrensvariante können zur erfindungsgemäßen Modifizierung der Stärke mit dem kationischen Polymer P) allgemein übliche native Stärken B) eingesetzt werden, z.B. aus der Gruppe Maisstärke, Kartoffelstärke, Weizenstärke, Reisstärke, Tapiokastärke, Sagostärke, Sorghumstärke, Maniokstärke, Erbsenstärke oder Mischungen der genannten nativen Stärken. Insbesondere werden solche Stärken B) verwendet, die einen Amylopektingehalt von mindestens 80 Gew.-% haben. Solche Stärken B) können beispielsweise durch Stärkefraktionierung üblicher nativer Stärken oder durch Züchtungsmaßnahmen aus solchen Pflanzen gewonnen werden, die praktisch reine Amylopektinstärke produzieren, wie in Günther Tegge, Stärke und Stärkederivate, Hamburg, Bers-Verlag 1984, Seite 157-160 beschrieben. Stärken mit einem Amylopektingehalt von mindestens 80 Gew.-% sind im Handel erhältlich. Sie werden im allgemeinen als wachsmaisstärke, Wachskartoffelstärke oder Wachsweizenstärke bezeichnet Diese können einzeln oder als Mischungen eingesetzt werden.

Neben den nativen Stärken B) eignen sich auch nichtanionisch modifizierte Stärken C). Dazu zählen hydrolytisch oder enzymatisch abgebaute Stärken C), beispielsweise Dextrine, wie Weiß- oder Gelbdextrine und Maltodextrine, oder oxidierte Stärken C), wie z.B. Dialdehydstärke. Weiterhin sind chemisch modifizierte Stärken C), z.B. mit anorganischen oder organischen Säuren veresterte, insbesondere phosphatierte und acetylierte Stärken sowie mit organischen Halogenverbindungen, Epoxiden oder Sulfaten veretherte Stärken geeignet. Stärken und Verfahren zu ihrem Abbau und ihrer chemischen Modifizierung werden in Ullmann's Encyclopedia of Industrial Chemistry, 5. Aufl., Bd. A25, S. 2 ff beschrieben, worauf hier Bezug genommen wird.

Die Modifizierung solcher noch nicht anionisch modifizierter Stärken B) oder C) erfolgt durch Umsetzung in wäßriger Suspension oder Lösung mit den zuvor beschriebenen kationischen Polymeren P) in Gegenwart eines anionischen Modifizierungsmittels M). Geeignete anionische Modifizierungsmittel M) sind die zuvor genannten. Die Reaktionsbedingungen entsprechen denen bei der Umsetzung von bereits anionisch modifizierten Stärken A) mit kationischen Polymeren P). Dabei erfolgt die Umsetzung im allgemeinen in Abwesenheit von Oxidationsmitteln, Polymerisationsinitiatoren und Alkalien. Das Gewichtsverhältnis von Stärke B) oder C) zu anionischem Modifizierungsmittel M) beträgt im allgemeinen etwa 1:0,00001 bis 1:1, bevorzugt 1:0,0001 bis 1:0,1, insbesondere 1:0,001 bis 1:0,01. Der pH-Wert des Gemisches liegt im allgemeinen im Bereich von etwa 1 bis 10, bevorzugt 1,5 bis 9, insbesondere 2,5 bis 8.

Ein weiterer Gegenstand der Erfindung ist eine mit einem kationischen Polymer P) modifizierte Stärke, die durch das zuvor beschriebene Verfahren erhältlich ist, wobei man eine anionisch modifizierte Stärke A) mit einem kationischen Polymer P) umsetzt, das
- i): 1 bis 100 Mol-% eines N-Vinylamins der Formel I 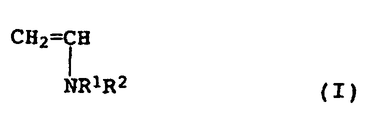 worin R1 und R2 unabhängig voneinander für Wasserstoff oder Alkyl stehen, und
- ii): 0 bis 99 Mol-% eines Monomers, ausgewählt unter Vinylformiat, Vinylacetat, Vinylpropionat, N-vinylformamid, Vinylalkohol, Acrylnitril und N-Vinylpyrrolidon
einpolymerisiert enthält.

Ein weiterer Gegenstand der Erfindung ist die Verwendung der erfindungsgemäß mit kationischen Polymeren P) modifizierten und aufgeschlossenen anionischen Stärken als Trocken- und Naßverfestigungsmittel sowie als Entwässerungs- und Retentionsmittel für Papier, Pappe und Karton. Sie werden dem Papierstoff in einer Menge von 0,5 bis 5,0, vorzugsweise 1,2 bis 3,0 Gew.-%, bezogen auf trockenen Papierstoff zugesetzt oder auf die Oberfläche eines bereits gebildeten Blattes aufgetragen. Der pH-Wert der Reaktionsmischung beträgt 1,5 bis 9,0, vorzugsweise 2,5 bis 8,0. Die Lösung des Verfestigungsmittels in Wasser hat bei einer Feststoffkonzentration von 3,5 Gew.-% eine Viskosität von 50 bis 10000, vorzugsweise 80 bis 4000 mPa.s, gemessen in einem Brookfield-Viskosimeter bei 20 Upm und einer Temperatur von 20°C. Vorzugsweise werden die erfindungsgemäß hergestellten modifizierten Stärken dem Papierstoff zugesetzt. Sie weisen gegenüber den bekannten Papierhilfsmitteln eine verbesserte Retention am Papierstoff auf, wobei bei ihrem Einsatz vorteilhafterweise der CSB-Wert des Abwassers geringer ist als bei herkömmlichen Papierhilfsmitteln.

Die erfindungsgemäßen kationisch modifizierten anionischen Stärken können als Trockenverfestigungsmittel bei der Herstellung von allen bekannten Papier-, Pappen- und Kartonqualitäten verwendet werden, z.B. Schreib-, Druck- und Verpackungspapieren. Die Papiere können aus einer Vielzahl verschiedenartiger Fasermaterialien hergestellt werden, beispielsweise aus Sulfit- oder Sulfatzellstoff in gebleichtem oder ungebleichtem Zustand, Holzschliff, Altappier, thermomechanischem Stoff (TMP) und chemothermomechanischem Stoff (CTMP). Der pH-Wert der Stoffsuspension liegt zwischen 4 und 10, vorzugsweise zwischen 6 und 8,5. Die Trockenverfestigungmittel können sowohl bei der Herstellung von Rohpapier für Papiere mit geringem Flächengewicht (LWC-Papieren ) sowie für Karton verwendet werden. Das Flächengewicht der Papiere beträgt zwischen 30 und 200, vorzugsweise 35 und 150 g/m², während es bei Karton bis zu 600 g/m² betragen kann. Die erfindungsgemäß hergestellten Papierprodukte haben gegenüber solchen Papieren, die in Gegenwart einer gleichen Menge nativer Stärke hergestellt wurden, eine merklich verbesserte Festigkeit, die beispielsweise anhand der Reißlänge, des Berstdrucks, des CMT-Werts (CMT = Concora Medium Test) und des Weiterreißwiderstands quantitativ erfasst werden kann.

Die Erfindung wird anhand der folgenden, nicht einschränkenden Beispiele erläutert.

Die in den Beispielen angegebenen Teile sind Gewichtsteile, die Prozentangaben beziehen sich auf das Gewicht.
Die Viskositäten der Verfestiger wurden in wässriger Lösung mit einer Feststoffkonzentration von 3,5 Gew.-% und einer Temperatur von 20°C in einem Brookfield-Viskosimeter bei 20 U/min bestimmt. Der K-Wert der Polymerisate wurde bestimmt nach H. Fikentscher, Cellulose Chemie 13 (1932), S. 58 ff., in einer 5%igen Kochsalzlösung bei 25°C und einer Polymerkonzentration von 0,5 Gew.-%.

Zur kationischen Modifizierung verwendetes Polymer: Copolymerisat aus 95 Mol-% Vinylamin und 5 Mol-% Vinylformamid in wässriger Lösung, pH-Wert 7, Polymergehalt: 7,8 Gew.-%, gewichtsmittleres Molekulargewicht ca. 160.000 g/mol, Viskosität 1800 mPas, hergestellt durch Hydrolyse von Polyvinylformamid, K-Wert 90, mit Natronlauge.

### Beispiel 1:

Eine phosphatierte Kartoffelstärke mit einem P₂O₅-Gehalt von 3 Gew.-% wurde in einem Laborjetkocher bei 120°C gekocht. Zu der Stärke wurden 15 Gew.-% Polymerlösung (≅ 1,17 Gew.-% Polymer) zugesetzt. Die Ladungsdichte betrug -0,38 meq/g fest, bestimmt durch Polyelektrolyttitration mit Poly-DADMAC (DADMAC = Diallyldimethylammoniumchlorid).

### Beispiel 2:

Wie unter Beispiel 1 beschrieben mit 30 Gew.-% Polymerlösung (≅ 2,35 Gew.-% Polymer),
Ladungsdichte: -0,21 meq/g (Poly-DADMAC).

### Beispiel 3:

Wie unter Beispiel 1 beschrieben mit 60 Gew.-% Polymerlösung (≅ 4,70 Gew.-% Polymer).
Ladungsdichte: +0,01 meq/g (Kaliumpolyvinylsulfat).

### Beispiel 4 (Vergleich):

Phosphatierte Kartoffelstärke nach Beispiel 1 ohne Kationisierungsmittel.
Ladungsdichte: -0,62 meq/g (Poly-DADMAC).

### Beispiel 5 (Vergleich):

Eine native Kartoffelstärke wurde in einem Laborjetkocher bei 120°C gekocht. Zu der Stärke wurden 15 Gew.-% Polymerlösung (≅ 1,17 Gew.-% Polymer) zugesetzt.
Ladungsdichte: + 0,03 meq/g (Kaliumpolyvinylsulfat).

### Beispiel 6 (Vergleich):

Handelsübliche kationisierte Stärke HI-CAT® (Roquette). Ladungsdichte: + 0,29 meq/g (Kaliumpolyvinylsulfat).

### Anwendungstechnische Beispiele

Zu einer Papierstoffsuspension, bestehend aus 40 % deinktem Zeitungsdruckpapier, 40 % undeinktem Zeitungsdruckpapier und 20 % gebleichtem Buchensulfitzellstoff mit einer Stoffdichte von 0,76 Gew.-% wurden jeweils 2 % (fest) der Stärken gemäß Beispiel 1 bis 6 zugesetzt.
- 1): Nach der Stärkezugabe wurden die Fasern abfiltriert und im Filtrat gemäß DIN 38 409 die CSB-Werte bestimmt.
- 2): Der Papierstoff wurde über ein Schopper-Riegler Gerät entwässert und die Entwässerungszeit (EWZ) gemäß DIN ISO 5267 bestimmt.
- 3): Aus dem Stoff wurden nach Stärkezugabe auf einem Rapid-Köthen-Blattbildner Papierblätter mit einem Flächengewicht von 120 g/m² hergestellt. Diese Blätter wurden auf ihre Festigkeit geprüft. Es wurden nach Standardmethoden Trockenberstdruck (TBD, DIN ISO 2758), Flachstauchwiderstand (CMT = Concora Medium Test, DIN EN 23035 = ISO 3035) und Trockenreißlänge (TRL, DIN ISO 1924) bestimmt.

Die anwendungstechnischen Ergebnisse sind in nachfolgender Tabelle aufgeführt.

| Beispiel | CSB (mg/l) | EWZ (s/500 ml) | TBD (kPa) | CMT (N) | TRL (m) |
|---|---|---|---|---|---|
| 0-Wert | 146 | 100 | 178 | 132 | 2901 |
| 1 | 275 | 99 | 176 | 144 | 3065 |
| 2 | 324 | 86 | 193 | 166 | 3366 |
| 3 | 166 | 77 | 214 | 189 | 3490 |
| 4 | 293 | 105 | 178 | 143 | 3065 |
| 5 | 330 | 112 | 178 | 143 | 3065 |
| 6 | 158 | 111 | 218 | 175 | 3397 |

Die erfindungsgemäßen Beispiele 1 bis 3 zeigen, daß durch Zusatz von anionischer Stärke, die mit kationischen Polymeren modifiziert ist, der Papierstoff deutlich schneller entwässert wird. Darüber hinaus bewirken derartige Stärken gegenüber üblichen Stärken gemäß den Vergleichsbeispielen 4 bis 6 eine Verbesserung der Festigkeit des Papiers. Diese ist bezüglich der Trockenreißlänge (TRL) sowie des CMT-Werts deutlich verbessert, bezüglich des Berstdrucks der kationischen Stärke (Beispiel 6) gleichwertig.

## Patentansprüche

1. Verfahren zur Herstellung von Stärke, die mit wenigstens einem kationischen Polymer P) modifiziert ist, wobei man
a) eine anionisch modifizierte Stärke A) mit dem kationischen Polymer P) umsetzt, oder
b) eine native Stärke B) oder eine nicht anionisch modifizierte Stärke C), die ausgewählt ist unter hydrolytisch oder enzymatisch abgebauten Stärken, oxidierten Stärken und mit anorganischen oder organischen Säuren veresterten sowie mit organischen Halogenverbindungen, Epoxiden oder Sulfaten veretherten chemisch modifizierten Stärken, mit dem kationischen Polymer P) in Gegenwart eines anionischen Modifizierungsmittels M) umsetzt, das ausgewählt ist unter α-Halogencarbonsäuren, deren Salzen und zweioder mehrwertigen anorganischen oder organischen Säuren,
und wobei man die Stärke während der Umsetzung mit dem Polymer aufschließt.

2. Verfahren nach Anspruch 1, **dadurch gekennzeichnet, daß** die Umsetzung in Wasser oder in wässrigem Medium erfolgt.

3. Verfahren nach Anspruch 2, **dadurch gekennzeichnet, daß** das Gewichtsverhältnis von Wasser zu Stärke 1:0,0005 bis 1:0,2, bevorzugt 1:0,001 bis 1:0,1, insbesondere 1:0,02 bis 1:0,06 beträgt.

4. Verfahren nach einem der Ansprüche 1 bis 3, **dadurch gekennzeichnet, daß** das Gewichtsverhältnis von Stärke zu Polymer P) 1:0,0005 bis 1:2, bevorzugt 1:0,001 bis 1:1, insbesondere 1:0,01 bis 1:0,1 beträgt.

5. Verfahren nach einem der Ansprüche 1 bis 4, **dadurch gekennzeichnet, daß** das Gewichtsverhältnis von Stärke B) oder C) zu anionischem Modifizierungsmittel M) 1:0,00001 bis 1:1, bevorzugt 1:0,0001 bis 1:0,1, insbesondere 1:0,001 bis 1:0,01 beträgt.

6. Verfahren nach einem der vorhergehenden Ansprüche, **dadurch gekennzeichnet, daß** die Stärke zu mindestens 80 % aufgeschlossen wird.

7. Verfahren nach einem der vorhergehenden Ansprüche, **dadurch gekennzeichnet, daß** man zur kationischen Modifizierung ein Polymer P) verwendet, das Ammonium- und/oder Aminogruppen enthält.

8. Verfahren nach einem der vorhergehenden Ansprüche, **dadurch gekennzeichnet, daß** man als kationische Polymere P) partiell oder vollständig hydrolysierte Homo- oder Copolymere von N-vinylcarbonsäureamiden, Homo- oder Copolymere von Diallyldialkylammonium-Verbindungen, N-Vinylimidazolen, N-Vinylimidazolinen und aminoalkylsubstituierten Estern und Amiden der Acrylsäure und Methacrylsäure sowie Polyalkylenimine einsetzt.

9. Verfahren nach einem der vorhergehenden Ansprüche, **dadurch gekennzeichnet, daß** man eine anionisch modifizierte Stärke A) mit einem kationischen Polymer P) umsetzt, das
i) 1 bis 100 Mol-% eines N-Vinylamins der Formel I 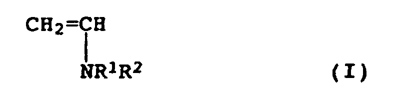 worin R¹ und R² unabhängig voneinander für Wasserstoff oder Alkyl stehen, und
ii) 0 bis 99 Mol-% eines Monomers, ausgewählt unter Vinylformiat, Vinylacetat, Vinylpropionat, N-Vinylformamid, Vinylalkohol, Acrylnitril und N-Vinylpyrrolidon
einpolymerisiert enthalten.

10. Verfahren nach einem der vorhergehenden Ansprüche, **dadurch gekennzeichnet, daß** man als kationisches Polymer (P) ein hydrolysiertes Homopolymer von N-Vinylformamid mit einem Hydrolysegrad von 2 bis 100 Mol-% einsetzt.

11. Verfahren nach Anspruch 10, **dadurch gekennzeichnet, daß** man als kationisches Polymer (P) ein hydrolysiertes Homopolymer von N-Vinylformamid mit einem Hydrolysegrad von 30 bis 95 Mol-% einsetzt.

12. Verfahren nach einem der vorhergehenden Ansprüche, **dadurch gekennzeichnet, daß** man zur Herstellung der anionisch modifizierten Stärke A) eine native Stärke B) oder eine nicht anionisch modifizierte Stärke C) mit einem anionischen Modifizierungsmittel M) umsetzt.

13. Verfahren nach einem der vorhergehenden Ansprüche, **dadurch gekennzeichnet, daß** der Veresterungsgrad der Stärke nach anionischer Modifizierung 0,01 bis 100 Mol-%, bevorzugt 0,1 bis 50 Mol-%, insbesondere 0,2 bis 20 Mol-%, bezogen auf die freien Hydroxylgruppen, beträgt.

14. Mit einem kationischen Polymer P) modifizierte Stärken, erhältlich durch ein Verfahren nach einem der vorhergehenden Ansprüche, bei dem man eine anionisch modifizierte Stärke A) mit einem kationischen Polymer P) umsetzt, das
i) 1 bis 100 Mol-% eines N-Vinylamins der Formel I 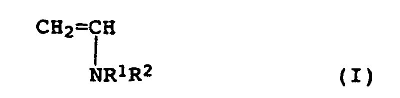 worin R¹ und R² unabhängig voneinander für Wasserstoff oder Alkyl stehen, und
ii) 0 bis 99 Mol-% eines Monomers, ausgewählt unter Vinylformiat, Vinylacetat, Vinylpropionat, N-Vinylformamid, Vinylalkohol, Acrylnitril und N-Vinylpyrrolidon
einpolymerisiert enthält.

15. Verwendung der modifizierten Stärken nach Anspruch 14 als Trocken- und Naßverfestigungsmittel sowie als Entwässerungsund Retentionsmittel bei der Herstellung von Papier, Pappe und Karton.

16. Verwendung der gemäß einem der Ansprüche 9 bis 11 erhältlichen modifizierten Stärken als Zusatz zum Papierstoff zur Erhöhung der Trockenfestigkeit bei der Herstellung von Papier, Pappe und Karton.

17. Papier, Pappe und Karton, verfestigt durch Zugabe von polymermodifizierter Stärke gemäß Anspruch 14.

## Claims

1. A process for the preparation of starch which is modified with at least one cationic polymer P), in which
a) an anionically modified starch A) is reacted with the cationic polymer P) or
b) a natural starch B) or a starch C) which is not anionically modified and is selected from hydrolytically or enzymatically degraded starches, oxidized starches and chemically modified starches esterified with inorganic or organic acids and etherified with organic halogen compounds, epoxides or sulfates is reacted with the cationic polymer P) in the presence of an anionic modifier M) which is selected from α-halocarboxylic acids, the salts thereof and dibasic or polybasic inorganic or organic acids,
and in which the starch is digested during the reaction with the polymer.

2. A process as claimed in claim 1, wherein the reaction is carried out in water or in an aqueous medium.

3. A process as claimed in claim 2, the weight ratio of water to starch is from 1:0.0005 to 1:0.2, preferably from 1:0.001 to 1:0.1, in particular from 1:0.02 to 1:0.06.

4. A process as claimed in any of claims 1 to 3, wherein the weight ratio of starch to polymer P) is from 1:0.0005 to 1:2, preferably from 1:0.001 to 1:1, in particular from 1:0.01 to 1:0.1.

5. A process as claimed in any of claims 1 to 4, wherein the weight ratio of starch B) or C) to anionic modifier M) is from 1:0.00001 to 1:1, preferably from 1:0.0001 to 1:0.1, in particular from 1:0.001 to 1:0.01.

6. A process as claimed in any of the preceding claims, wherein at least 80% of the starch is digested.

7. A process as claimed in any of the preceding claims, wherein a polymer P) which contains ammonium or amino groups is used for cationic modification.

8. A process as claimed in any of the preceding claims, wherein the cationic polymers P) used are partially or completely hydrolyzed, homo- or copolymers of N-vinylcarboxamides, homo- or copolymers of diallyldialkylammonium compounds, N-vinylimidazoles, N-vinylimidazolines and aminoalkyl substituted esters and amides of acrylic acid and methacrylic acid and polyalkyleneamines.

9. A process as claimed in any of the preceding claims, wherein an anionically modified starch A) is reacted with a cationic polymer P) which contains, incorporated in the form of polymerized units,
i) from 1 to 100 mol% of a N-vinylamine of the formula I 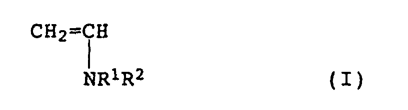 where R¹ and R², independently of one another, are hydrogen or alkyl, and
ii) from 0 to 99 mol% of a monomer selected from vinyl formate, vinyl acetate, vinyl propionate, N-vinylformamide, vinyl alcohol, acrylonitrile and N-vinylpyrrolidone.

10. A process as claimed in any of the preceding claims, wherein the cationic polymer P) used is a hydrolyzed homopolymer of N-vinylformamide having a degree of hydrolysis of from 2 to 100 mol%.

11. A process as claimed in claim 10, wherein the cationic polymer P) used is a hydrolyzed homopolymer of N-vinylformamide having a degree of hydrolysis of from 30 to 95 mol%.

12. A process as claimed in any of the preceding claims, wherein, for the preparation of the anionically modified starch A), a natural starch B) or a starch C) which has not been anionically modified is reacted with an anionic modifier M).

13. A process as claimed in any of the preceding claims, wherein the degree of esterification of the starch after anionic modification is from 0.01 to 100, preferably from 0.1 to 50, in particular from 0.2 to 20, mol%, based on the free hydroxyl groups.

14. A starch modified with a cationic polymer P) and obtainable by a process as claimed in any of the preceding claims, in which an anionically modified starch A) is reacted with a cationic polymer P) which contains, incorporated in the form of polymerized units,
i) from 1 to 100 mol% of a N-vinylamine of the formula I 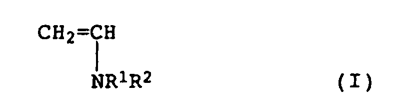 where R¹ and R², independently of one another, are hydrogen or alkyl, and
ii) from 0 to 99 mol% of a monomer selected from vinyl formate, vinyl acetate, vinyl propionate, N-vinylformamide, vinyl alcohol, acrylonitrile and N-vinylpyrrolidone.

15. The use of a modified starch as claimed in claim 14 as a dry strength or wet strength agent or as a drainage aid or retention aid in the production of paper, board and cardboard.

16. The use of the modified starches obtainable as claimed in any of claims 9 to 11 as an additive to paper stock for increasing the dry strength in the production of paper, board and cardboard.

17. A paper, board or cardboard strengthened by the addition of polymer-modified starch as claimed in claim 14.

## Revendications

1. Procédé de préparation d'amidon, qui est modifié par au moins un polymère cationique P), dans lequel on
a) fait réagir un amidon anioniquement modifié A) avec le polymère cationique P), ou
b) fait réagir un amidon natif B) ou un amidon modifié de manière non anionique C), qui est choisi parmi des amidons dégradés par hydrolyse ou voie enzymatique, des amidons oxydés et des amidons chimiquement modifiés estérifiés par des acides inorganiques ou organiques ainsi qu'éthérifiés par des composés halogénés organiques, des époxydes ou des sulfates, avec le polymère cationique P) en présence d'un agent de modification anionique M), qui est choisi parmi des acides α-halogénocarboxyliques, leurs sels et des acides inorganiques ou organiques bivalents ou polyvalents,
et dans lequel on digère l'amidon pendant la réaction avec le polymère.

2. Procédé suivant la revendication 1, **caractérisé en ce que** la réaction a lieu dans l'eau ou en milieu aqueux.

3. Procédé suivant la revendication 2, **caractérisé en ce que** le rapport pondéral entre l'eau et l'amidon est de 1/0,0005 à 1/0,2, de préférence de 1/0,001 à 1/0,1, en particulier de 1/0,02 à 1/0,06.

4. Procédé suivant l'une des revendications 1 à 3, **caractérisé en ce que** le rapport pondéral entre l'amidon et le polymère P) est de 1/0,0005 à 1/2, de préférence de 1/0,001 à 1/1, en particulier de 1/0,01 à 1/0,1.

5. Procédé suivant l'une des revendications 1 à 4, **caractérisé en ce que** le rapport pondéral entre l'amidon B) ou C) et l'agent de modification anionique M) est de 1/0,00001 à 1/1, de préférence de 1/0,0001 à 1/0,1, en particulier de 1/0,001 à 1/0,01.

6. Procédé suivant l'une des revendications précédentes, **caractérisé en ce que** l'amidon est digéré pour au moins 80 %.

7. Procédé suivant l'une des revendications précédentes, **caractérisé en ce que**, pour la modification cationique, on utilise un polymère P) qui contient des groupes ammonium et/ou amino.

8. Procédé suivant l'une des revendications précédentes, **caractérisé en ce qu'**on met en oeuvre, comme polymères cationiques P), des homopolymères ou copolymères partiellement ou totalement hydrolysés d'amides d'acide N-vinylcarboxylique, des homopolymères ou copolymères de composés de diallyl-dialkylammonium, des N-vinylimidazoles, des N-vinylimidazolines et des esters et amides substitués par de l'aminoalkyle de l'acide acrylique et de l'acide méthacrylique ainsi que des polyalkylèneimines.

9. Procédé suivant l'une des revendications précédentes, **caractérisé en ce qu'**on fait réagir un amidon anioniquement modifié A) avec un polymère cationique P), qui contient sous forme copolymérisée
i) 1 à 100 moles % d'une N-vinylamine de la formule I 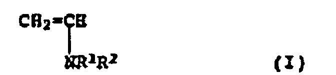 dans laquelle R¹ et R² représentent indépendamment l'un de l'autre de l'hydrogène ou un alkyle, et
ii) 0 à 99 moles % d'un monomère, choisi parmi du formiate de vinyle, de l'acétate de vinyle, du propionate de vinyle, du N-vinylformamide, de l'alcool vinylique, de l'acrylonitrile et de la N-vinylpyrrolidone.

10. Procédé suivant l'une des revendications précédentes, **caractérisé en ce qu'**on met en oeuvre, comme polymère cationique (P), un homopolymère hydrolysé de N-vinylformamide présentant un degré d'hydrolyse de 2 à 100 moles %.

11. Procédé suivant la revendication 10, **caractérisé en ce qu'**on met en oeuvre, comme polymère cationique (P), un homopolymère hydrolysé de N-vinylformamide présentant un degré d'hydrolyse de 30 à 95 moles %.

12. Procédé suivant l'une des revendications précédentes, **caractérisé en ce qu'**on fait réagir, pour la préparation de l'amidon anioniquement modifié A), un amidon natif B) ou un amidon non modifié de manière anionique C) avec un agent de modification anionique M).

13. Procédé suivant l'une des revendications précédentes, **caractérisé en ce que** le degré d'estérification de l'amidon après modification anionique est de 0,01 à 100 moles %, de préférence 0,1 à 50 moles %, en particulier 0,2 à 20 moles %, par rapport aux groupes hydroxyle libres.

14. Amidons modifiés par un polymère cationique P), que l'on peut obtenir par un procédé suivant l'une des revendications précédentes, dans lequel on fait réagir un amidon anioniquement modifié A) avec un polymère cationique P), qui contient sous forme copolymérisée
i) 1 à 100 moles % d'une N-vinylamine de la formule I 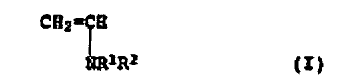 dans laquelle R¹ et R² représentent indépendamment l'un de l'autre de l'hydrogène ou un alkyle, et
ii) 0 à 99 moles % d'un monomère, choisi parmi du formiate de vinyle, de l'acétate de vinyle, du propionate de vinyle, du N-vinylformamide, de l'alcool vinylique, de l'acrylonitrile et de la N-vinylpyrrolidone.

15. Utilisation des amidons modifiés suivant la revendication 14, comme agents de solidification à sec et au mouillé ainsi que comme agents déshydratants et de rétention pour la fabrication de papier, de carton-pâte et de carton.

16. Utilisation des amidons modifiés que l'on peut obtenir suivant l'une des revendications 9 à 11, comme additif pour la pâte à papier en vue d'augmenter la résistance à sec lors de la fabrication de papier, de carton-pâte et de carton.

17. Papier, carton-pâte et carton, solidifiés par addition d'amidon modifié par un polymère conforme à la revendication 14.
